# EUROPEAN PATENT APPLICATION

(11) **EP 3 208 311 A1**
(43) Date of publication of application: **23.08.2017**
(21) Application number: 15850989.3
(22) Date of filing: 13.10.2015
(51) Int. Cl.: C08L 67/02, C08L 55/02, C08K 7/14, C08J 5/04

(54) **POLYMER RESIN COMPOSITION**

(30) Priority: 16.10.2014 KR 20140139909
(71) Applicant: SK Chemicals Co., Ltd., Gyeonggi-do 13494 (KR)
(72) Inventor: SOHN, Dong-Cheol, Goyang-si Gyeonggi-do 10348 (KR); LEE, Kye Yune, Suwon-si Gyeonggi-do 16324 (KR); SHIN, Jong-Wook, Suwon-si Gyeonggi-do 16316 (KR)
(74) Representative: Modiano, Micaela Nadia
(86) International application number: PCT/KR2015/010789
(87) International publication number: WO 2016/060446

(57) **Abstract**

A polymer resin composition exhibiting low-gloss and excellent scratch resistance is provided, in which the polymer resin composition includes polytrimethylene terephthalate; an unsaturated nitrile-diene-based rubber-aromatic vinyl graft copolymer; and a glass fiber.

## Description

### BACKGROUND OF THE INVENTION

### (a) Field of the Invention

The present disclosure relates to a polymer resin composition which exhibits improved mechanical properties, and is excellent in low-gloss and scratch resistance.

### (b) Description of the Related Art

Polyester resins are widely used in reinforced plastics, paints, films, and resins for molding, and are also used as fabric materials to produce clothing due to properties of superior heat resistance, mechanical strength, and elastic strength. In addition, recently polyester resins are used in the fields of interior / exterior parts for automobiles, electric / electronic products, and construction materials due to their characteristic properties.

Particularly, the fields of interior / exterior parts for automobiles, electric / electronic products, construction materials and exterior materials are greatly affected by the environment such as temperature and humidity, and scratches are easily occurred on their surface. Therefore, there is an increasing demand for a polymer resin composition exhibiting excellent durability and scratch resistance.

Therefore, a technique of blending a resin having excellent durability or scratch resistance with the polyester resin, or post-processing such as painting or plating on a molded product of the polyester resin has been proposed. However, the polymer resin compositions proposed so far do not have sufficient durability and scratch resistance to be used for interior / exterior materials for automobiles, and the technique such as painting has disadvantages in that the process becomes complicated, and the defective rate and manufacturing costs become high.

Accordingly, it is still necessary to develop a polymer resin which exhibits excellent durability and mechanical properties, and is also excellent in low-gloss and scratch resistance.

### SUMMARY OF THE INVENTION

The present disclosure is directed to a polymer resin composition which exhibits improved mechanical properties, and is excellent in low-gloss and scratch resistance.

The present disclosure provides a polymer resin composition including polytrimethylene terephthalate; an unsaturated nitrile-diene-based rubber-aromatic vinyl graft copolymer; and a glass fiber.

Hereinafter, a polymer resin composition according to specific embodiments of the present disclosure will be described.

According to one embodiment of the present disclosure, a polymer resin composition including polytrimethylene terephthalate; an unsaturated nitrile-diene-based rubber-aromatic vinyl graft copolymer; and a glass fiber may be provided.

Although there has been proposed a method of mixing a specific polymer resin with the polyester resin to complement or enhance the physical properties of the polyester resin, the improvement or complementary synergistic effect due to the mixing of such components had a certain limitation. And, it has not been easy to provide a polymer resin composition having excellent low-gloss and scratch resistance even under unpainted conditions while exhibiting sufficient mechanical properties.

Accordingly, the inventors of the present disclosure continuously studied on the polymer resin composition which exhibits improved mechanical properties, and is excellent in low-gloss and scratch resistance even under unpainted conditions to be applied to interior / exterior materials for automobiles without post-processing such as painting which is conventional in the related art. And they found that when polytrimethylene terephthalate, an unsaturated nitrile-diene-based rubber-aromatic vinyl graft copolymer, and a glass fiber are mixed, the polymer resin composition including the mixture above exhibits excellent low-gloss and scratch resistance together with excellent mechanical properties, thereby completing the present disclosure.

In particular, the polymer resin composition is environment-friendly because of including polytrimethylene terephthalate which is a biomaterial, and it is excellent in low-gloss and scratch resistance as well as mechanical properties such as heat resistance because of including an amorphous unsaturated nitrile-diene-based rubber-aromatic vinyl graft copolymer having excellent low-gloss, and a glass fiber having excellent scratch resistance and mechanical properties. Thus, the polymer resin composition may be applied to interior / exterior materials for automobiles without post-processing such as painting.

In addition, the polymer resin composition of one embodiment may include 5 to 95 % by weight of the polytrimethalate; 1 to 50 % by weight of the unsaturated nitrile-diene-based rubber-aromatic vinyl graft copolymer; and 1 to 70 % by weight of the glass fiber.

The polymer resin composition may be prepared by using a conventional method and apparatus for preparing a blend or mixture of polymer resins without any limitations. For example, polytrimethylene terephthalate; an unsaturated nitrile-diene-based rubber-aromatic vinyl graft copolymer; and a glass fiber may be injected to a general blender, mixer, or tumbler, and then blended with each other by a twin-screw kneading extruder to prepare the polymer resin composition. In the preparation process of the polymer resin composition, using sufficiently dried resins are preferred.

The polytrimethylene terephthalate in the polymer resin composition of one embodiment is environment-friendly as a bio material and has high tensile strength and slipping property due to excellent intermolecular stacking property according to the zigzag structure of the polymer main chain. Therefore, the polymer resin composition may exhibit excellent scratch resistance compared with polyethylene terephthalate (PET), polybutylene terephthalate (PBT), and the like.

In addition, crystallization speed of the polytrimethylene terephthalate is somewhat slower than polybutylene terephthalate (PBT), but is much faster than polyethylene terephthalate (PET). Thus, the polytrimethylene terephthalate is also practical as an injection material.

And, the polytrimethylene terephthalate may have a weight average molecular weight of about 10,000 to 150,000 g/mol, and preferably about 50,000 to 120,000 g/mol.

In addition, the polymer resin composition of one embodiment includes the unsaturated nitrile-diene-based rubber-aromatic vinyl graft copolymer which exhibits low-gloss. Therefore, the unsaturated nitrile-diene-based rubber-aromatic vinyl graft copolymer not only gives the polymer resin composition stability and high-quality texture, but also enables the composition omitting painting and thereby reducing the costs, when it is used as a material having a high external exposure such as interior / exterior parts for automobiles, electric / electronic products, construction materials, and the like.

In the meantime, the unsaturated nitrile-diene-based rubber-aromatic vinyl graft copolymer may be prepared by a bulk polymerization process. Generally, an unsaturated nitrile-diene-based rubber-aromatic vinyl graft copolymer can be prepared by an emulsion polymerization process or a bulk polymerization process. But, the unsaturated nitrile-diene-based rubber-aromatic vinyl graft copolymer prepared by the emulsion polymerization process has excellent gloss due to a small average particle size of about 0.3 *µ*m and a rounded pore shape. Therefore, it has been difficult to use the polymer resin composition including the unsaturated nitrile-diene-based rubber-aromatic vinyl graft copolymer prepared by the emulsion polymerization process as interior / exterior parts for automobiles, electric / electronic products, construction materials, and the like, due to the excellent gloss of the copolymer.

However, the polymer resin composition of one embodiment includes the unsaturated nitrile-diene-based rubber-aromatic vinyl graft copolymer prepared by the bulk polymerization process which is amorphous and diffuses reflection, unlike the copolymer prepared by the emulsion polymerization process. Therefore, when the polymer resin composition applied to the parts, a high-quality texture may be obtained due to the improved low-gloss characteristics.

The unsaturated nitrile-diene-based rubber-aromatic vinyl graft copolymer may be in the form of a core-shell rubber having an average particle diameter of about 1 to 4 *µ*m. If the average particle diameter of the copolymer is smaller than 1 *µ*m, the copolymer may not be suitable for unpainted applications since it has a characteristic that gloss is increasing. Further, if the average particle diameter of the copolymer is larger than 4 *µ*m, its dispersibility and mechanical strength may be lowered even though it has a characteristic of low-gloss.

In the unsaturated nitrile-diene-based rubber-aromatic vinyl graft copolymer, a glass transition temperature of the core may be -20 °C or less, and a glass transition temperature of the shell may be 20 °C or more.

In the meantime, the unsaturated nitrile-diene-based rubber-aromatic vinyl graft copolymer may improve rigidity and chemical resistance by including the unsaturated nitrile, and the unsaturated nitrile may be acrylonitrile, methacrylonitrile, ethacrylonitrile, phenylacrylonitrile, α-chloroacrylonitrile, or a mixture thereof. Particularly, the use of acrylonitrile among the unsaturated nitrile above is preferable, because the copolymer may exhibit superior high-rigidity.

And, the unsaturated nitrile-diene-based rubber-aromatic vinyl graft copolymer may improve impact resistance by including the diene-based rubber, and the diene-based rubber may be a butadiene-type rubber or an isoprene-type rubber.

In addition, the unsaturated nitrile-diene-based rubber-aromatic vinyl graft copolymer may improve processability by including the aromatic vinyl, and the aromatic vinyl may be styrene, α-methyl styrene vinyltoluene, t-butyl styrene, halogen-substituted styrene, 2,4-dimethyl styrene, ethyl styrene, or a mixture thereof.

And, the unsaturated nitrile-diene-based rubber-aromatic vinyl graft copolymer of the polymer resin composition of one embodiment may be an acrylonitrile-butadiene-styrene graft copolymer (ABS resin). As the acrylonitrile-butadiene-styrene graft copolymer exhibits excellent tensile strength and heat resistance while being excellent in low-gloss, it is suitable for interior / exterior parts for automobiles, electric / electronic products, construction materials, and the like requiring scratch resistance.

Further, the polymer resin composition of one embodiment includes the glass fiber having excellent heat resistance and high tensile strength. Therefore, the polymer resin composition may have improved mechanical properties such as heat resistance and tensile strength as well as scratch resistance by including the glass fiber together with the polytrimethylene terephthalate, the unsaturated nitrile-diene-based rubber-aromatic vinyl graft copolymer, and the like.

The glass fiber may have a diameter of about 0.1 to 30 *µ*m, preferably about 5 to 15 *µ*m, and a length of about 0.1 to 10 mm, preferably about 1 to 7 mm. The glass fiber having a diameter and a length satisfying the above-mentioned range may provide smooth kneading and improving mechanical properties in the extrusion process, since it has good handling properties and feeding characteristics.

The glass fiber may have any shape such as a circular shape, a rectangular shape, an elliptical shape, a dumbbell shape, a rhombus shape, and the like, without limitation.

In the meantime, the polymer resin composition of one embodiment may further include one or more quenchers selected from the group consisting of PAN(Polyacrylonitrile) resin, Silica, and Silicone bead.

The quencher is an additive having characteristics of lowering the dispersibility and gloss in a polyester product, and may impart low-gloss to the polymer resin composition including the quencher. The quencher may be a compound such as PAN(polyacrylonitrile) resin, silica, silicone bead, and the like, and may be used in an amount of 0.01 to 10 wt%, preferably 0.1 to 5 wt%.

In addition, the polymer resin composition of one embodiment may further include one or more selected from the group consisting of an impact modifier, a filler, a stabilizer, an UV additive, a lubricant, an antioxidant, an antimicrobial agent, a mold release agent, a dye and a pigment.

The polymer resin composition of one embodiment exhibits excellent mechanical properties and is resistant to changes in the external environment such as heat, UV, and humidity, thereby exhibiting excellent weather resistance, low-gloss, and heat resistance. Therefore, it may be used for general purposes such as interior / exterior parts for automobiles, home appliances, construction materials, and the like. Further, the composition is suitable for automobile materials such as an air vent wing blade, an inside door handle housing, a cup holder, a console and the like.

According to the present disclosure, a polymer resin composition which exhibits improved mechanical properties and is excellent in low-gloss and scratch resistance under unpainted conditions may be provided.

The polymer resin composition not only exhibits excellent mechanical properties but also has excellent low-gloss and scratch resistance, so that it is possible to omit a painting process when used as automobile materials, home appliances, and the like, thereby reducing costs sharply.

### DETAILED DESCRIPTION OF THE EMBODIMENTS

Hereinafter, preferred examples of the present disclosure will be explained in more detail. However, these examples are provided for illustrative purposes and are not intended to limit the scope of the present disclosure.

### <Examples and Comparative Examples> Preparation of the polymer resin composition

### <Example 1>

### (1) Preparation of the polymer resin composition

1 part by weight of silica, 0.2 parts by weight of a phenol-based primary antioxidant and 0.2 parts by weight of a phosphite-based secondary antioxidant were added together, based on 100 parts by weight of a resin consisting of 70% by weight of polytrimethylene terephthalate, 10% by weight of an acrylonitrile-butadiene-styrene graft copolymer, 20% by weight of a glass fiber, and kneading extrusion was uniformly carried out using a twin-screw kneading extruder (Φ : 40 mm, L/D = 40) so as to prepare a pellet.

In this regard, the polytrimethylene terephthalate was PTT available from SK Chemicals (Republic of Korea), the acrylonitrile-butadiene-styrene graft copolymer was ET-70 available from Nippon A & L (Japan), the glass fiber was 952 (diameter: 10µm, length: 4mm) available from Owens Corning (Republic of Korea), the silica was E-220A available from Tosoh Silica (Japan), the phenol-based primary antioxidant was AO-60 available from ADEKA (Japan), and the phosphite-based secondary antioxidant was Igarfos 168 availabe from Clariant (Switzerland).

### <Example 2>

1 part by weight of silica, 0.2 parts by weight of a phenol-based primary antioxidant and 0.2 parts by weight of a phosphite-based secondary antioxidant were added together, based on 100 parts by weight of a resin consisting of 60% by weight of polytrimethylene terephthalate, 20% by weight of an acrylonitrile-butadiene-styrene graft copolymer, 20% by weight of a glass fiber, and kneading extrusion was uniformly carried out using a twin-screw kneading extruder (Φ : 40 mm, L/D = 40) so as to prepare a pellet.

In this regard, the polytrimethylene terephthalate was PTT available from SK Chemicals (Republic of Korea), the acrylonitrile-butadiene-styrene graft copolymer was ET-70 available from Nippon A & L (Japan), the glass fiber was 952 available from Owens Corning (Republic of Korea), the silica was E-220A available from Tosoh Silica (Japan), the phenol-based primary antioxidant was AO-60 available from ADEKA (Japan), and the phosphite-based secondary antioxidant was Igarfos 168 availabe from Clariant (Switzerland).

### <Example 3>

2 part by weight of PAN(Polyacrylonitrile) resin, 0.2 parts by weight of a phenol-based primary antioxidant and 0.2 parts by weight of a phosphite-based secondary antioxidant were added together, based on 100 parts by weight of a resin consisting of 75% by weight of polytrimethylene terephthalate, 10% by weight of an acrylonitrile-butadiene-styrene graft copolymer, 15% by weight of a glass fiber, and kneading extrusion was uniformly carried out using a twin-screw kneading extruder (Φ : 40 mm, L/D = 40) so as to prepare a pellet.

In this regard, the polytrimethylene terephthalate was PTT available from SK Chemicals (Republic of Korea), the acrylonitrile-butadiene-styrene graft copolymer was ET-70 available from Nippon A & L (Japan), the glass fiber was 952 available from Owens Corning (Republic of Korea), the PAN(Polyacrylonitrile) resin was AM-10 available from Han Nanotech (Republic of Korea), the phenol-based primary antioxidant was AO-60 available from ADEKA (Japan), and the phosphite-based secondary antioxidant was Igarfos 168 availabe from Clariant (Switzerland).

### < Comparative Example 1>

A polymer resin composition was prepared in the same manner as in Example 2, except that 60 wt% of polyethylene terephthalate (PET; BB-8050 available from SK Chemicals, Republic of Korea) was used instead of 60 wt% of the polytrimethylene terephthalate.

### <Comparative Example 2>

A polymer resin composition was prepared in the same manner as in Example 2, except that 60 wt% of polybutylene terephthalate (PBT; 1200-211M available from ChangChun Chem., Taiwan) was used instead of 60 wt% of the polytrimethylene terephthalate.

### <Reference Example 1>

A polymer resin composition was prepared in the same manner as in Example 2, except that 20 wt% of an acrylonitrile-butadiene-styrene graft copolymer prepared by an emulsion polymerization process (HR-181; available from Kumho Petrochemical, Republic of Korea) was used instead of 20 wt% of the acrylonitrile-butadiene-styrene graft copolymer prepared by a bulk polymerization process.

### <Experimental Example> Test of physical properties of the polymer resin composition

The pellets prepared according to Examples 1 to 3, Comparative Examples 1 to 2, and Reference Example 1 were injected using an injection machine at the injection temperature of 230 °C, and then the injected test samples were adjusted under conditions of 23±2 °C and a relative humidity of 50±5%. Their mechanical properties were measured as follows. The test results are given in the following Table 2.

### Experimental Example 1: Test of impact strength.

In accordance with ASTM D 256, test samples were prepared, and their impact strength was measured using an Izod impact tester (Toyoseiki).

### Experimental Example 2: Test of tensile property

In accordance with ASTM D 638, test samples were prepared, and their tensile strength and elongation were measured using a universal testing machine (Zwick Roell Z010).

### Experimental Example 3: Test of heat resistance

In accordance with ASTM D 648, test samples were prepared, and their hea t resistance was measured using a heat resistance tester (HDT Tester, Toyosei ki).

### Experimental Example 4: Test of gloss

In accordance with ASTM D 523, test samples were prepared, and their glo ss was measured using a Glossmeter.

### Experimental Example 5: Test of scratch resistance

In accordance with JIS K6718, test samples were prepared, and their scra tch resistance was measured using a Scratch Tester.

In this regard, the criteria for the scratch resistance are as shown in Table 1 below. For reference, in the case of Hyundai Motor Company (Republic of Korea), the scratch resistance of grade 3 or higher gets pass grade and ma y be evaluated as excellent in scratch resistance.

**[Table 1]**

| Grade | Criteria | |
|---|---|---|
| | Width of scratch (*µ*m) | Surface |
| 5 | 20 or less | Almost no surface damage |
| 4 | 100∼200 | Surface damage not recognized |
| 3 | 200∼300 | Fine surface damage recognized |
| 2 | 300∼400 | Whitening occurred due to obvious surface damage |
| 1 | 400 or more | Exceedingly severe surface damage |

**[Table 2]**

| Section | Unit | Example | | | Comparative Example | | Reference Example |
|---|---|---|---|---|---|---|---|
| | | 1 | 2 | 3 | 1 | 2 | 1 |
| Izod impact strength(1/8") | J/m | 60 | 60 | 40 | 65 | 55 | 80 |
| Izod impact strength(1/4") | J/m | 55 | 58 | 40 | 60 | 55 | 70 |
| Tensile strength | kg/cm² | 1,200 | 1,140 | 1,100 | 1,100 | 940 | 900 |
| Elongation | % | 3.5 | 3.0 | 3.5 | 3.5 | 3.5 | 3.5 |
| Heat resistance (1.82MPa) | °C | 185 | 170 | 175 | 78 | 167 | 150 |
| Gloss | | 1.2 | 1.3 | 2.5 | 3.5 | 3.5 | 10.0 |
| Scratch resistance | | 3 | 3 | 3 | 2 | 3 | 2 |

As shown in the test results, the polymer resin compositions of the examples especially showed low-gloss and excellent scratch resistance, with equivalent or better mechanical properties compared with the comparative examples including polyethylene terephthalate (PET) or polybutylene terephthalate (PBT) which has been conventionally used for interior / exterior parts for automobiles.

Therefore, the polymer resin compositions of the examples are environment-friendly because of including the polytrimethylene terephthalate which is a biomaterial, and have excellent low-gloss and scratch resistance. Consequently, the compositions are suitable for interior / exterior parts for automobiles, electric / electronic products, construction materials, and the like, as they have not only stability and high-quality texture, but also features that can be used in unpainted state, when used as a material having a high external exposure.

Although specific parts of the present disclosure have been described in detail, it will be apparent to those skilled in the art that these specific descriptions are provided for preferred embodiments and the scope of the present disclosure is not limited thereby. Therefore, the scope of the present disclosure should be defined only by the accompanying claims and equivalents thereof.

## Claims

1. A polymer resin composition, comprising:
Polytrimethylene terephthalate;
an unsaturated nitrile-diene-based rubber-aromatic vinyl graft copolymer; and
a glass fiber.

2. The polymer resin composition of claim 1, comprising:
5 to 95 % by weight of the polytrimethalate;
1 to 50 % by weight of the unsaturated nitrile-diene-based rubber-aromatic vinyl graft copolymer; and
1 to 70 % by weight of the glass fiber.

3. The polymer resin composition of claim 1, wherein the polytrimethylene terephthalate has a weight average molecular weight of 10,000 to 150,000 g/mol.

4. The polymer resin composition of claim 1, wherein the unsaturated nitrile-diene-based rubber-aromatic vinyl graft copolymer is prepared by a bulk polymerization process.

5. The polymer resin composition of claim 1, wherein the unsaturated nitrile-diene-based rubber-aromatic vinyl graft copolymer is in the form of a core-shell rubber having an average particle diameter of 1 to 4 *µ*m.

6. The polymer resin composition of claim 5, wherein the core has a glass transition temperature of -20 °C or less and the shell has a glass transition temperature of 20 °C or more in the unsaturated nitrile-diene-based rubber-aromatic vinyl graft copolymer.

7. The polymer resin composition of claim 1, wherein the unsaturated nitrile is one or more selected from the group consisting of acrylonitrile, methacrylonitrile, ethacrylonitrile, phenylacrylonitrile, and α - chloroacrylonitrile.

8. The polymer resin composition of claim 1, wherein the diene-based rubber is a butadiene-type rubber or an isoprene-type rubber.

9. The polymer resin composition of claim 1, wherein the aromatic vinyl is one or more selected from the group consisting of styrene, α-methyl styrene vinyl toluene, t-butyl styrene, halogen-substituted styrene, 2,4-dimethyl styrene, and ethyl styrene.

10. The polymer resin composition of claim 1, wherein the unsaturated nitrile-diene-based rubber-aromatic vinyl graft copolymer is an acrylonitrile-butadiene-styrene graft copolymer.

11. The polymer resin composition of claim 1, wherein the glass fiber has a diameter of 0.1 to 30 *µ*m and a length of 0.1 to 10 mm.

12. The polymer resin composition of claim 1, further comprising one or more quenchers selected from the group consisting of PAN(Polyacrylonitrile) resin, silica, and silicone bead.

13. The polymer resin composition of claim 1, further comprising one or more additives selected from the group consisting of an impact modifier, a filler, a stabilizer, an UV additive, a lubricant, an antioxidant, an antimicrobial agent, a mold release agent, a dye and a pigment.
